# EUROPÄISCHE PATENTANMELDUNG

(11) **EP 1 559 613 A2**
(43) Veröffentlichungstag der Anmeldung: **03.08.2005**
(21) Anmeldenummer: 05001372.1
(22) Anmeldetag: 25.01.2005
(51) Int. Cl.: B60Q 1/20, B60Q 1/14

(54) **Kraftfahrzeug mit einer Nebelschlussleuchte und einem Fahrassistenzsystem**

(30) Priorität: 28.01.2004 DE 102004004190
(71) Anmelder: Opel Eisenach GmbH, 99817 Eisenach (DE)
(72) Erfinder: Wagner, Nikolas, Dr., 65345 Eltville-Rauenthal (DE)
(74) Vertreter: Daniel, Ulrich W.P., Dr.

(57) **Zusammenfassung**

Ein Kraftfahrzeug weist eine Nebelschlussleuchte und ein Fahrassistenz-System mit einem LIDAR-Sensor auf. Um eine Fehlbedienung der Nebelschlussleuchte zu vermeiden, ist die Nebelschlussleuchte von dem LIDAR-Sensor einschaltbar. Weiterhin ist ein entsprechendes Verfahren angegeben.

## Beschreibung

Die Erfindung bezieht sich auf ein Kraftfahrzeug mit einer Nebelschlussleuchte und einem Fahrassistenzsystem mit einem LIDAR-Sensor sowie auf ein entsprechendes Verfahren.

Aus der Praxis der Kraftfahrzeugtechnik ist es bekannt, an der Rückseite von Kraftfahrzeugen rote Nebelschlussleuchten anzuordnen, die vom Fahrer des Kraftfahrzeuges bei verminderter Sichtweite aufgrund von Nebel oder starkem Regen eingeschaltet werden, um dem nachfolgenden Verkehr zur Vermeidung eines Auffahrunfalls die Position des eigenen Kraftfahrzeuges anzuzeigen. Ebenso können an der Vorderseite des Kraftfahrzeuges Nebelscheinwerfer angeordnet sein, die zur besseren Ausleuchtung bei Nebel der vor dem Kraftfahrzeug liegenden Fahrbahn eingeschaltet werden.

Hierfür ist es jedoch erforderlich, dass die verminderte Sichtweite durch Nebel oder Regen von dem Fahrer des Kraftfahrzeuges richtig bewertet wird. Insbesondere darf die Nebelschlussleuchte und gegebenenfalls das Nebellicht nach den Vorschriften der Straßenverkehrsordnung erst bei einer unter 50m verminderten Sichtweite und nur außerhalb geschlossener Ortschaften eingeschaltet werden.

Bei der Nutzung der Nebelschlussleuchte treten mehrere Fehler auf. Das Einschalten unterbleibt aus Vergesslichkeit, falscher Einschätzung einer tatsächlich herrschenden Sichtweite oder einer Überlastung des Fahrers durch die allgemeine Verkehrslage, wodurch nachfolgende Verkehrsteilnehmer auf dieses Kraftfahrzeug auffahren könnten. Der häufigste Fehler besteht darin, dass die Nebelschlussleuchte eingeschaltet wird, obwohl die Sicht für einen normalen Fahrtbetrieb mit Abblendlicht noch ausreichend ist. Aufgrund der großen Leuchtkraft von Nebelschlussleuchten führt dies zu einer Blendung nachfolgender Verkehrsteilnehmer bzw. zu einer Blendung entgegenkommender Verkehrsteilnehmer durch die Nebelscheinwerfer. Weiterhin kann u. a. nach dem Durchfahren einer Nebelbank das Ausschalten der Nebelschlussleuchte vergessen werden, was ebenfalls zur Blendung nachfolgender Fahrer führt.

Zur Vermeidung dieser Nachteile ist es bekannt, ein Kraftfahrzeug mit einem zusätzlichen Sensor zur Erkennung von Nebel auszurüsten. Mit einem derartigen Sensor, der üblicherweise auf einem optischen Messprinzip beruht, kann eine verminderte Sichtweite festgestellt und mit einem entsprechenden Signal die Nebelschlussleuchte und/oder der Nebelscheinwerfer eingeschaltet werden. Ein derartiger, beispielsweise aus der DE 41 28 708 A1 bekannter Sensor ist jedoch teuer in der Anschaffung.

Aus der DE 198 59 601 A1 ist es bekannt, einen bereits in einem Kraftfahrzeug vorhandenen Regensensor, mit dem das Einsetzen von Regen festgestellt wird, um die Scheibenwischer an der Frontscheibe des Kraftfahrzeuges zu aktivieren, ebenfalls dazu zu verwenden, eine Nebelschlussleuchte anzusteuern. Da der Regensensor jedoch primär auf das Feststellen von Regen ausgelegt ist, treten bei diesem Sensor beim Erkennen von Nebel große Fehler auf, so dass eine Nebelschlussleuchte und gegebenenfalls ein Nebelscheinwerfer zum falschen Zeitpunkt ein- oder ausgeschaltet werden können.

Die DE 42 06 142 A1 zeigt eine Vorrichtung zur sichtweitenabhängigen Steuerung der Lichtabgabe von Nebelleuchten bei Fahrzeugen, wobei von einem Sendeteil Licht eines bestimmten Wellenlängenbereichs in die Atmosphäre ausgesandt und mit einem Sensor die von der Atmosphäre zurückgestrahlten optisch sichtbaren elektromagnetischen Wellen erfasst werden. Mit einem derartigen Sensor ist zwar das Vorhandensein von Nebel bzw. eine aktuell herrschende Verringerung der Sichtweite genau feststellbar, jedoch ist hierfür ein zusätzlicher Sensor im Kraftfahrzeug notwendig, wodurch dessen Herstellungskosten erhöht sind.

Die DE 196 36 211 A1 offenbart eine Fahrzeug-Nebellichtanlage mit einem Sichtweitensensor zur Bestimmung der Sichtweite, der in Abhängigkeit der von ihm festgestellten Sichtweite einen Nebelscheinwerfer und/ oder eine Nebelschlussleuchte ansteuert. Hierbei ist der Erfassungsbereich des Sichtweitensensors nach oben ausgerichtet, um ein zuverlässiges Messergebnis zu erhalten. Dieser Sensor ist ebenfalls ein zusätzlich im Kraftfahrzeug anzubringender Sensor.

Die EP 0 635 731 B1 beschreibt ein Verfahren zum Bestimmen der Sichtweite bei dichtem Nebel unter Verwendung eines dem Fachmann bekannten LIDAR-Sensors, wobei das von einem Laser ausgehende Licht an den den Nebel bildenden Wassertröpfchen in der Luft gestreut und über zwei Empfangskanäle des Sensors das gestreute Licht wiederum registriert wird, um eine exakte Messung der tatsächlichen Sichtweite zu erhalten. Dieser Sensor stellt ebenfalls ein zusätzliches Bauteil im Kraftfahrzeug dar.

Weiterhin ist es bekannt, insbesondere moderne und hochwertige Kraftfahrzeuge mit Sensoren zum Messen des Abstands zu feststehenden oder beweglichen Hindernissen zu versehen, wobei diese Sensoren Bestandteil eines Fahrassistenz-Systems sind, mit dem dem Fahrer des Kraftfahrzeuges ein sichereres Führen des Kraftfahrzeuges ermöglicht und der Abstand zu einem Hindernis über geeignete Anzeigemittel dem Fahrer des Kraftfahrzeuges mitgeteilt wird. Derartige Fahrassistenz-Systeme überwachen beispielsweise den Abstand zu vorausfahrenden oder nachfolgenden anderen Kraftfahrzeugen, insbesondere mit LIDAR-Sensoren. Sobald beispielsweise ein Mindestabstand zu einem vorausfahrenden Fahrzeug unterschritten wird, wird entweder eine Warnmitteilung an den Fahrer ausgegeben oder sogar in die Führung des Kraftfahrzeuges, beispielsweise durch Betätigen der Bremse, eingegriffen. Bisher wurden hierfür Radarsignale im Mikrowellenbereich verwendet, wobei beispielsweise an der Vorderseite des Kraftfahrzeuges ein Radarimpuls ausgesandt und über die Laufzeitmessung des an einem Hindernis reflektierten und von einem geeigneten Empfänger am Kraftfahrzeug wieder empfangenen Radarimpulses auf den Abstand zu diesem Hindernis geschlossen wird. Verbesserte Messergebnisse werden mit dem Fachmann bekannten LIDAR-Sensoren erzielt, die im Wesentlichen auf dem gleichen Prinzip beruhen, nur dass die elektromagnetischen Wellen von einem Laser erzeugt bzw. abgegeben werden.

Es ist Aufgabe der Erfindung, ein Kraftfahrzeug der eingangs genannten Art zu schaffen, bei dem eine Fehlbedienung der Nebelschlussleuchte unter Vermeidung zusätzlicher Bauteile oder Komponenten ausgeschlossen ist. Des Weiteren soll ein entsprechendes Verfahren angegeben werden.

Erfindungsgemäß wird die Aufgabe konstruktiv dadurch gelöst, dass die Nebelschlussleuchte von dem LIDAR-Sensor einschaltbar ist, und verfahrensgemäß dadurch, dass die Nebelschlussleuchte mit einem Signal eines LIDAR-Sensors betätigt wird.

Der Kerngedanke der Erfindung besteht darin, dass ein bereits im Kraftfahrzeug vorhandener LIDAR-Sensor bzw. dessen Messsignale dazu verwendet werden, um eine ebenfalls im Kraftfahrzeug vorhandene Nebelschlussleuchte zu betätigen oder anzusteuern. Wie es dem Fachmann bekannt ist, wird das von dem Laser im LIDAR-Sensor beispielsweise in Fahrtrichtung voraus ausgestrahlte Licht durch Partikel in der Luft, unter anderem die fein verteilten Wassertropfen bei Nebel, gedämpft, wobei die Stärke der Dämpfung von der Partikelgröße und Partikelanzahl abhängt. Das Maß dieser Dämpfung kann im LIDAR-Sensor mit einer geeigneten Empfangseinrichtung festgestellt werden, wobei davon ausgegangen wird, dass bei klarer und unverschmutzter Umgebungsluft nur eine geringfügige Dämpfung durch die Luft zwischen dem Kraftfahrzeug und dem Hindernis, an dem der Laserstrahl reflektiert wird, auftritt. Das bedeutet, dass mit dem LIDAR-Sensor, der Bestandteil eines bereits im Kraftfahrzeug vorhandenen Fahrassistenz-Systems ist, beispielsweise der Abstand zu einem vorausfahrenden Kraftfahrzeug kontinuierlich überwacht und gegebenenfalls über geeignete Anzeigemittel dem Fahrer des Kraftfahrzeuges mitgeteilt wird. Sobald das Kraftfahrzeug beispielsweise in eine Nebelbank einfährt, erfolgt durch die Streuung und Reflektion des Laserstrahls an den Wassertröpfchen eine Dämpfung der im LIDAR-Sensor empfangenen reflektierten elektromagnetischen Wellen, wobei ein exakter und vom Fachmann bestimmbarer Zusammenhang zwischen der Stärke der Dämpfung und der tatsächlich herrschenden Sichtweite besteht. Somit ist es möglich, den bereits im Kraftfahrzeug vorhandenen LIDAR-Sensor zum Feststellen von Nebel oder sonstigen verschlechterten Sichtbedingungen zu verwenden, um über ein entsprechendes Steuersignal die Nebelschlussleuchte des Kraftfahrzeuges im Bedarfsfall einzuschalten.

Die Nebelschlussleuchte und/oder der Nebelscheinwerfer können weiterhin mit den üblichen Schaltern am Armaturenbrett des Kraftfahrzeuges ein- und ausgeschaltet werden. Das bedeutet, dass der Fahrer eine von dem LIDAR-Sensor eingeschaltete Nebelschlussleuchte auch wieder ausschalten kann, wenn dies von ihm gewünscht ist. Ebenso kann er diese selbsttätig einschalten.

Der Vorteil der Erfindung liegt darin, dass eine Fehlbedienung der Nebelschlussleuchte, wie vorstehend beschrieben, ausgeschlossen ist. Die Steuerung der Nebelschlussleuchte mit dem Signal eines bereits im Kraftfahrzeug vorhandenen LIDAR-Sensors erfordert zudem praktisch keinen zusätzlichen Aufwand, da die Auswertung des LIDAR-Signals bzw. die entsprechende Ansteuerung der Nebelschlussleuchte beispielsweise in einer zentralen Steuereinrichtung zur Steuerung aller Funktionen des Kraftfahrzeuges hard- und/oder softwaremäßig in einfacher Weise hinterlegt sein kann, wodurch keine zusätzlichen Bauteile notwendig sind. Ebenso sind sämtliche Komponenten von modernen Kraftfahrzeugen, beispielsweise über einen CAN-Bus, miteinander vernetzt, so dass das Ansteuern der Nebelschlussleuchten von der zentralen Steuereinrichtung in einfacher Weise möglich ist.

Bevorzugt ist auch ein Nebelscheinwerfer an der Frontseite des Kraftfahrzeuges von dem LIDAR-Sensor einschaltbar. Dabei kann das Einschalten des Nebelscheinwerfers entweder synchron zur Nebelschlussleuchte erfolgen oder unabhängig davon. Beispielsweise ist es möglich, die Sichtweiten, bei denen jeweils der Nebelscheinwerfer bzw. die Nebelschlussleuchte eingeschaltet werden, unterschiedlich zu wählen.

Um eine unnötige Betätigung der Nebelschlussleuchte bzw. des Nebelscheinwerfers zu vermeiden ist eine Verzögerungsschaltung vorgesehen. Sonach wird die Nebelschlussleuchte erst nach Ablauf einer vorzugsweise einstellbaren Zeitspanne eingeschaltet, wobei innerhalb dieser Zeitspanne die Sichtweite unter einen bestimmten Grenzwert verringert sein muss. Demzufolge ist vermieden, dass beim Durchfahren lediglich einer kurzen Nebelbank bereits die Nebelschlussleuchte eingeschaltet wird. Die Zeitspanne kann auch geschwindigkeitsabhängig gewählt werden.

Zur Vermeidung einer Blendung anderer Verkehrsteilnehmer ist die Nebelschlussleuchte und/oder der Nebelscheinwerfer von dem LIDAR-Sensor ausschaltbar, sobald von dem LIDAR-Sensor eine Zunahme der Sichtweite über einen bestimmten Grenzwert festgestellt wird. Hierbei kann ebenfalls die vorstehend beschriebene Verzögerungsschaltung vorgesehen sein, um ein zu frühes Ausschalten zu vermeiden.

Insbesondere ist der LIDAR-Sensor Bestandteil eines ACC-Systems ("Adaptive Cruise Control"), mit dem unter anderem ein konstanter Abstand zu einem voraus-fahrenden Kraftfahrzeug einhaltbar ist. Sobald bei diesem ACC-System bei konstantem Abstand zum vorausfahrenden Kraftfahrzeug, d. h. eine gleich bleibende Laufzeit für das LIDAR-Signal, eine Dämpfung des von dem vorausfahrenden Kraftfahrzeug reflektierten Laserlichts im Empfänger des LIDAR-Sensors festgestellt wird, wird dies von einer entsprechend ausgelegten Bewertungseinheit als Verringerung der Sichtweite bewertet und ein entsprechendes Signal beispielsweise an eine zentrale Steuereinrichtung oder direkt an die Nebelschlussleuchte und/oder den Nebelscheinwerfer übermittelt.

Zur Anpassung an individuelle Bedürfnisse unterschiedlicher Fahrer ist zweckmäßigerweise der Schwellwert, bei dem die Nebelschlussleuchte ein- oder ausgeschaltet wird, d.h. eine Grenze für die tatsächlich herrschende Sichtweite, in gewünschter Weise einstellbar. Hierbei sind jedoch die gesetzlichen Vorgaben einzuhalten.

Ferner ist es möglich, dass, sobald von dem LIDAR-Sensor das Unterschreiten einer festlegbaren Sichtweite festgestellt wird, lediglich ein entsprechendes Warnsignal oder eine Warnmitteilung an den Fahrer des Kraftfahrzeuges ausgegeben wird, so dass dieser frei entscheiden kann, ob er die Nebelschlussleuchte und/oder den Nebelscheinwerfer einschalten möchte. Dies kann durch Aufleuchten eines Symbols im Armaturenbrett, einen akustischen Warnhinweis oder durch Ausgabe einer entsprechenden Mitteilung, beispielsweise auf einem Display eines Bordcomputers, erfolgen.

In einer weiteren Ausgestaltung ist dem LIDAR-Sensor bzw. der zentralen Steuereinrichtung ein Navigationssystem zugeordnet, mit dem beispielsweise mit Hilfe von GPS ("Global Positioning System") die Position des Kraftfahrzeuges feststellbar ist, um ein Einschalten der Nebelschlussleuchte und/oder des Nebelscheinwerfers u. a. in geschlossenen Ortschaften oder an sonstigen hierfür nicht geeigneten Streckenabschnitten zu vermeiden.

Für den Fachmann ist es ersichtlich, dass auch das Verfahren zum Betätigen einer Nebelschlussleuchte eines Kraftfahrzeuges entsprechend den vorstehend beschriebenen Merkmalen ausgestaltet sein kann.

Es versteht sich, dass die vorstehend genannten Merkmale nicht nur in der jeweils angegebenen Kombination, sondern auch in anderen Kombinationen verwendbar sind. Der Rahmen der vorliegenden Erfindung ist nur durch die Ansprüche definiert.

## Patentansprüche

1. Kraftfahrzeug mit einer Nebelschlussleuchte und einem Fahrassistenz-System mit einem LIDAR-Sensor, **dadurch gekennzeichnet, dass** die Nebelschlussleuchte von dem LIDAR-Sensor einschaltbar ist.

2. Kraftfahrzeug nach Anspruch 1, **dadurch gekennzeichnet, dass** ein Nebelscheinwerfer von dem LIDAR-Sensor einschaltbar ist.

3. Kraftfahrzeug nach Anspruch 1 oder 2, **dadurch gekennzeichnet, dass** eine Verzögerungsschaltung vorgesehen ist.

4. Kraftfahrzeug nach einem der Ansprüche 1 bis 3, **dadurch gekennzeichnet, dass** die Nebelschlussleuchte und/oder der Nebelscheinwerfer von dem LIDAR-Sensor ausschaltbar sind.

5. Kraftfahrzeug nach einem der Ansprüche 1 bis 4, **dadurch gekennzeichnet, dass** der LIDAR-Sensor Bestandteil eines ACC-Systems ist.

6. Kraftfahrzeug nach einem der Ansprüche 1 bis 5, **dadurch gekennzeichnet, dass** ein Schwellwert für die Sichtweite einstellbar ist.

7. Kraftfahrzeug nach einem der Ansprüche 1 bis 6, **dadurch gekennzeichnet, dass** eine Aufforderung zum Ein/Ausschalten der Nebelschlussleuchte und/oder des Nebelscheinwerfers an einen Nutzer des Kraftfahrzeuges übermittelbar ist.

8. Kraftfahrzeug nach einem der Ansprüche 1 bis 7, **dadurch gekennzeichnet, dass** ein Navigationssystem vorgesehen ist.

9. Verfahren zum Betätigen einer Nebelschlussleuchte eines Kraftfahrzeuges, **dadurch gekennzeichnet, dass** die Nebelschlussleuchte mit einem Signal eines LIDAR-Sensors eines Fahrassistenz-Systems betätigt wird.
